# EUROPEAN PATENT APPLICATION

(11) **EP 3 754 626 A1**
(43) Date of publication of application: **23.12.2020**
(21) Application number: 20180980.3
(22) Date of filing: 19.06.2020
(51) Int. Cl.: G08G 1/16, G08G 1/0962, G06K 9/00, B60Q 9/00, B60Q 1/00, B60W 30/00, B60W 40/10, B60W 50/14

(54) **VEHICLE WARNING SYSTEM**

(30) Priority: 21.06.2019 JP 2019115167
(71) Applicant: Yazaki Corporation, Minato-ku Tokyo 108-8333 (JP)
(72) Inventor: KOJIMA, Hiroki, Susono-shi, Shizuoka 410-1194 (JP); OTOMO, Kentaro, Susono-shi, Shizuoka 410-1194 (JP)
(74) Representative: Grünecker Patent- und Rechtsanwälte PartG mbB

(57) **Abstract**

In a vehicle warning system (1), the line-of-sight detection unit (12) detects the line of sight of a driver operating the vehicle. The line-of-sight fixedness determination device (20) determines the line-of-sight fixedness condition, in other words, how much the line of sight of the driver that is detected by the line-of-sight detection unit (12), is fixed. The danger-level determination device (30) determines the driving conditions. The warning-level determination unit (41) determines the warning level, based on the line-of-sight fixedness condition that is determined by the line-of-sight fixedness determination device (20), and the driving conditions that is determined by the danger-level determination device (30). The alerting unit (42) alerts the driver based on the warning level that is determined by the warning-level determination unit (41).

## Description

### BACKGROUND OF THE INVENTION

### 1. Field of the Invention

The present invention relates to a vehicle warning system.

### 2. Description of the Related Art

Japanese Patent Application Laid-open No. 2010-26654 discloses, as a conventional vehicle warning systems, a driver state decision device that determines the conditions of a driver. The driver state decision device determines that the driver is in a careless state when the line of sight of the driver stays still for a time equal to or longer than a threshold.

The above driver state decision device disclosed in Japanese Patent Application Laid-open No. 2010-26654 is desired to be more accurate, for example, in determining the level of carelessness of the driver and to alert the driver based on the determination result.

### SUMMARY OF THE INVENTION

From the above point of view, it is an object of the present invention to provide a vehicle warning system capable of appropriately alerting a driver.

In order to solve the above mentioned problem and achieve the object, a vehicle warning system according to one aspect of the present invention includes a line-of-sight detection unit configured to detect a line of sight of a driver operating a vehicle; a line-of-sight fixedness determination unit configured to determine how much the line of sight of the driver that is detected by the line-of-sight detection unit is fixed; a driving condition determination unit configured to determine a driving condition of the vehicle; a warning-level determination unit configured to determine a warning level, based on how much the line of sight of the driver is fixed that is determined by the line-of-sight fixedness determination unit, and the driving condition of the vehicle that is determined by the driving condition determination unit; and an alerting unit configured to issue an alert based on the warning level that is determined by the warning-level determination unit.

According to another aspect of the present invention, in the vehicle warning system, it is preferable that the driving condition of the vehicle includes at least one of an operating condition of accelerating and decelerating the vehicle, a condition of route navigation to suggest a route to a destination, and a surrounding condition of the vehicle.

According to still another aspect of the present invention, in the vehicle warning system, it is preferable that the warning-level determination unit increases the warning level when the line-of-sight fixedness determination unit determines that the line of sight of the driver is fixed and the driving condition determination unit determines that the driving condition of the vehicle is dangerous, compared with a warning level when the line of sight of the driver is not fixed and the driving condition of the vehicle is not dangerous.

According to still another aspect of the present invention, in the vehicle warning system, it is preferable that a type of road where the vehicle is running includes an expressway and an ordinary road having a speed limit lower than a speed limit on the expressway, and when the type of road where the vehicle is running is the expressway, the line-of-sight fixedness determination unit applies a stricter criterion than a criterion applied to the ordinary road, to determine fixedness of the line of sight of the driver.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram that illustrates an example configuration of a vehicle warning system according to an embodiment;
FIG. 2 is a flowchart of a first operation example of the vehicle warning system according to the embodiment;
FIG. 3 is a flowchart of a second operation example of the vehicle warning system according to the embodiment; and
FIG. 4 is a flowchart of a third operation example of the vehicle warning system according to the embodiment.

### DETAILED DESCRIPTION OF THE PREFERRED EMBODIMENTS

Embodiments of the present invention will now be described in detail with reference to the drawings. The embodiments are not intended to limit the present invention. Components described below include what the skilled person could easily conceive of and what are substantially the same. Those components are allowed to be combined with one another at appropriate. Various omissions, replacements, and changes can be made without departing from the spirit of the present invention.

### Embodiment

A vehicle warning system 1 according to an embodiment will now be described with reference to the drawings. The vehicle warning system 1 is mounted on a vehicle to alert the driver operating the vehicle. The vehicle is equipped with a driving operation mechanism 2, a navigation system 3, and an advanced driver assistance system (ADAS) 4.

The driving operation mechanism 2 is operated to drive the vehicle, and includes, for example, an accelerator 2a and a brake 2b. The accelerator 2a includes, although not illustrated, an accelerator pedal, a sensor to detect the position of the accelerator pedal varying in response to operation to the pedal, and other components. The accelerator 2a is connected to a later-described danger-level determination device 30 and outputs the position of the accelerator pedal that is detected by the sensor to the danger-level determination device 30. The brake 2b includes, although not illustrated, a brake pedal, a brake pad, a transmission mechanism for transmitting operation to the brake pedal to the brake pad, and other components.

The brake 2b is connected to the danger-level determination device 30 and outputs information relating to operation to the brake pedal to the danger-level determination device 30.

The navigation system 3 navigates a route to a destination. The navigation system 3 calculates the current location of the vehicle using a global positioning system (GPS) signal from a GPS satellite. The navigation system 3 plots the calculated location of the vehicle on the map with reference to map information stored in a storage and navigates a route to the destination. The map information includes, for example, a school zone representing an area having a school and school roads and other relative facilities, a site where traffic accidents frequently occur, and a pedestrian crossing where pedestrians cross the road. The navigation system 3 receives traffic jam information from, for example, information providing systems installed on the roads and specifies a certain area having heavy traffic with reference to the traffic jam information. The navigation system 3 is connected to the danger-level determination device 30 and outputs the map information and areas having heavy traffic around the vehicle to the danger-level determination device 30.

The ADAS 4 is a system that assists the driver while driving. The ADAS 4 includes, for example, a sensor for sensing other vehicles in front of and behind the vehicle, a camera for photographing areas around the vehicle, an information processor for performing various processing on information from the sensor and the camera, and an assisting device for assisting, for example, operation to the brake 2b using the processing information from the information processor. The ADAS 4 is connected to the danger-level determination device 30 and outputs ADAS information, indicating the presence or absence of objects around the vehicle, such as pedestrians, other vehicles, and any typical obstacles, to the danger-level determination device 30.

The vehicle warning system 1 determines the level of danger based on information from the driving operation mechanism 2, the navigation system 3, and the ADAS 4, and raises an alert based on the determined level of danger and on how much the line of sight of the driver is fixed. The vehicle warning system 1 will now be described in detail.

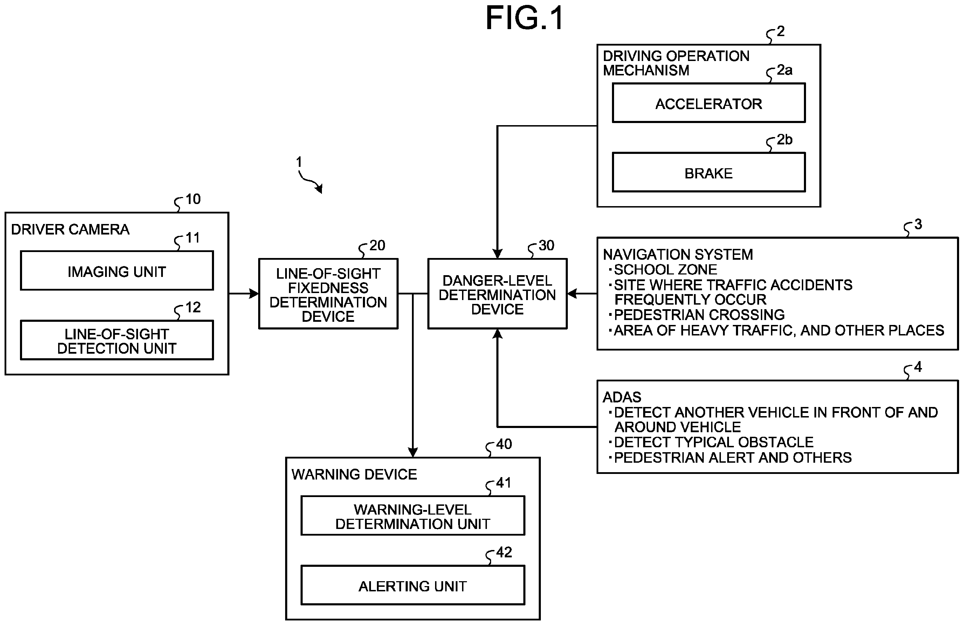

As described in FIG. 1, for example, the vehicle warning system 1 includes a driver camera 10, a line-of-sight fixedness determination device 20, the danger-level determination device 30, and a warning device 40. The driver camera 10 images the face of a driver. The driver camera 10 is installed at a location that allows imaging of the face of the driver, for example, installed on the instrument panel, the dashboard, and the steering column. The driver camera 10 has a camera lens disposed toward the face of the driver. The driver camera 10 starts when the driver turns the ignition switch to the accessory (ACC) position or to the ignition (IG) position, and continues imaging the face of the driver until the switch is turned off.

The driver camera 10 includes an imaging unit 11 and a line-of-sight detection unit 12. The imaging unit 11 captures a still image or a moving image (hereinafter, collectively referred to as "image"). The imaging unit 11 images the face of the driver and outputs the face image to the line-of-sight detection unit 12. The line-of-sight detection unit 12 detects the line of sight of the driver. The line-of-sight detection unit 12 detects, for example, the position of a pupil in each eye of the driver, using known image processing such as pattern matching of an image. The line-of-sight detection unit 12 compares a predetermined image of certain eyes and the face image of the driver imaged by the driver camera 10, and detects the positions of the pupils of the driver from the face image of the driver. The line-of-sight detection unit 12 further detects the line of sight of the driver based on the detected positions of the pupils. The "line of sight" is a direction in which the driver sees and is a line connecting the pupils and an object to be seen. The line-of-sight detection unit 12 is connected to the line-of-sight fixedness determination device 20 and outputs the detected line of sight to the line-of-sight fixedness determination device 20.

The line-of-sight fixedness determination device 20 determines how much the line of sight of the driver is fixed. For example, the line-of-sight fixedness determination device 20 determines how much the line of sight of the driver is fixed, using a predetermined fixedness determination range. The fixedness determination range is a range disposed in front of the driver's eyes in the vehicle longitudinal direction (direction of running), and is a range the driver facing the front of the vehicle can visually recognize without moving the line of sight. The fixedness determination range is, for example, a range that allows the line of sight of the driver to vertically and horizontally move approximately +/- five degrees in each direction with the line of sight of the driver facing the front of the vehicle as a reference. The line-of-sight fixedness determination device 20 determines that the line of sight of the driver is fixed when the line of sight of the driver is in the fixedness determination range such that the line of sight covers the range at a predetermined proportion for a predetermined time. For example, the line-of-sight fixedness determination device 20 determines that the line of sight of the driver is fixed when the line of sight of the driver covers more than 80% of the fixedness determination range for ten seconds. The line-of-sight fixedness determination device 20 determines that the line of sight of the driver is not fixed when the line of sight of the driver does not cover more than 80% of the fixedness determination range for ten seconds.

The line-of-sight fixedness determination device 20 may change the fixedness determination range and the proportion, depending on the type of road where the vehicle is running. The type of road includes an expressway and an ordinary road having a speed limit lower than a speed limit on the expressway. If the vehicle is running on the expressway, the line-of-sight fixedness determination device 20 applies a stricter criterion than a criterion applied to the ordinary road, to determine the fixedness of the line of sight of the driver. For example, in the case of the expressway, the line-of-sight fixedness determination device 20 reduces the fixedness determination range and increases the proportion at which the line of sight of the driver covers the fixedness determination range, in comparison with the case of the ordinary road. Specifically, the line-of-sight fixedness determination device 20 sets the fixedness determination range for the ordinary road such that the line of sight of the driver can move vertically and horizontally by approximately +/- five degrees in each direction, as described above, and sets the fixedness determination range for the expressway such that the line of sight of the driver can move by approximately +/- three degrees in each direction. For the ordinary road, the line-of-sight fixedness determination device 20 determines that the line of sight of the driver is fixed when the line of sight of the driver covers more than 80% of the fixedness determination range for ten seconds, as described above. For the expressway, the line-of-sight fixedness determination device 20 determines that the line of sight of the driver is fixed when the line of sight of the driver covers 90% of the fixedness determination range for ten seconds. The line-of-sight fixedness determination device 20 is connected to the warning device 40 and outputs, to the warning device 40, the determination result indicating whether the line of sight of the driver is fixed

The line-of-sight fixedness determination device 20 may determine whether the type of road where the vehicle is running is an expressway or an ordinary road, for example, based on the current location of the vehicle obtained from the navigation system 3. The line-of-sight fixedness determination device 20 determines whether the type of road is an expressway or an ordinary road, based on the speed of the vehicle acquired from a speedometer (not illustrated). For example, the line-of-sight fixedness determination device 20 determines the road type to be an expressway if the speed of the vehicle is equal to or higher than 80 km/h, and determines to be an ordinary road if the speed is lower than 80 km/h.

The danger-level determination device 30 determines the level of danger, based on the driving conditions. The driving conditions include at least one of the operating condition of accelerating and decelerating the vehicle performed by the driving operation mechanism 2, the condition of route navigation performed by the navigation system 3, and the surrounding condition of the vehicle detected by the ADAS 4. The operating condition of acceleration and deceleration indicate states of operations to speed up and slow down the vehicle. The condition of route navigation indicates conditions of roads in the case of suggesting a route to the destination, which include, for example, as described above, a school zone, sites where traffic accidents frequently occur, pedestrian crossings, and areas of heavy traffic. The surrounding condition of the vehicle indicate the presence or absence of pedestrians, other vehicles, obstacles, and the like, around the vehicle.

The danger-level determination device 30 is connected to the driving operation mechanism 2 and determines the level of danger based on the position of the accelerator and operating information of the brake pedal, output from the driving operation mechanism 2. For example, when acceleration and deceleration operations frequently occur, the danger-level determination device 30 determines that the level of danger is high and the driver therefore needs to be warned. For example, when the number of acceleration and deceleration operations exceeds a predetermined threshold within a predetermined time period, the danger-level determination device 30 determines that the level of danger is high. When the acceleration and deceleration operations do not frequently occur, the danger-level determination device 30 determines that the level of danger is low. For example, when the number of acceleration and deceleration operations falls below a predetermined threshold within a predetermined time period, the danger-level determination device 30 determines that the level of danger is low.

The danger-level determination device 30 is connected to the navigation system 3 and determines the level of danger based on the map information and the condition of route navigation such as areas of heavy traffic around the vehicle, which are output from the navigation system 3. For example, if the condition of route navigation includes a school zone, sites where traffic accidents frequently occur, pedestrian crossings, areas of heavy traffic, and similar places, the danger-level determination device 30 determines that the level of danger is high and the driver thus needs to be warned. If the condition of route navigation includes no school zones, sites where traffic accidents frequently occur, pedestrian crossings, areas of heavy traffic, or similar places, the danger-level determination device 30 determines that the level of danger is low.

The danger-level determination device 30 is connected to the ADAS 4 and determines the level of danger based on the ADAS information output from the ADAS 4. For example, in the presence of pedestrians, other vehicles, obstacles, and similar objects around the vehicle, the danger-level determination device 30 determines that the level of danger is high. Conversely, in the absence of pedestrians, other vehicles, obstacles, and similar objects around the vehicle, the danger-level determination device 30 determines that the level of danger is low. As described above, the danger-level determination device 30 determines the danger level of the vehicle, using at least one of the operating condition of accelerating and decelerating the vehicle, the condition of route navigation, and the surrounding condition of the vehicle, and outputs the determined level of danger to the warning device 40.

The warning device 40 is used to warn the driver. The warning device 40 includes a warning-level determination unit 41 and an alerting unit 42. The warning-level determination unit 41 determines the level of warning. The warning-level determination unit 41 is connected to the line-of-sight fixedness determination device 20 and the danger-level determination device 30 and determines the level of warning at which the driver is warned, based on the line-of-sight fixedness condition, that is, how much the line of sight of the driver is fixed, which is output from the line-of-sight fixedness determination device 20, and the level of danger output from the danger-level determination device 30.

When the line-of-sight fixedness determination device 20 determines that the line of sight of the driver is not fixed, in other words, that the driver is paying attention to the circumstances of the vehicle, the warning-level determination unit 41 determines that the driver does not need to be warned.

When the line-of-sight fixedness determination device 20 determines that the line of sight of the driver is fixed, in other words, that the driver is not paying attention to the circumstances of the vehicle, and, when the danger-level determination device 30 determines that the vehicle is not in danger according to the driving conditions, the warning-level determination unit 41 determines that a lower level of warning needs to be given to the driver and outputs this determination result to the alerting unit 42.

When the line-of-sight fixedness determination device 20 determines that the line of sight of the driver is fixed, in other words, that the driver is not paying attention to the circumstances of the vehicle, and, when the danger-level determination device 30 determines that the vehicle is in danger according to the driving conditions, the warning-level determination unit 41 determines that a higher level of warning needs to be given to the driver and outputs this determination result to the alerting unit 42.

The alerting unit 42 alerts the driver using the level of warning. Specifically, the alerting unit 42 alerts the driver at different levels of alerting based on the level of warning determined by the warning-level determination unit 41. The alerting unit 42 is connected to the warning-level determination unit 41, and the warning-level determination unit 41 outputs the determination result that a lower level of or a higher level of warning needs to be issued. When the alerting unit 42 receives from the warning-level determination unit 41 the determination result that a lower level of warning needs to be issued, the alerting unit 42 gives an alerting sound from a speaker in the cabin and flashes an alerting light mounted on the instrument panel, for example. Furthermore, when the alerting unit 42 receives from the warning-level determination unit 41 the determination result that a higher level of warning needs to be issued, the alerting unit 42 gives a louder alerting sound than at the lower level of warning from the speaker in the cabin and flashes the alerting light in a more stimulating color to express a strong alert than at the lower level of warning, for example. In the case where the vehicle is stationary, the alerting unit 42 gives no alerts even when the warning-level determination unit 41 outputs the determination result that warning needs to be issued.

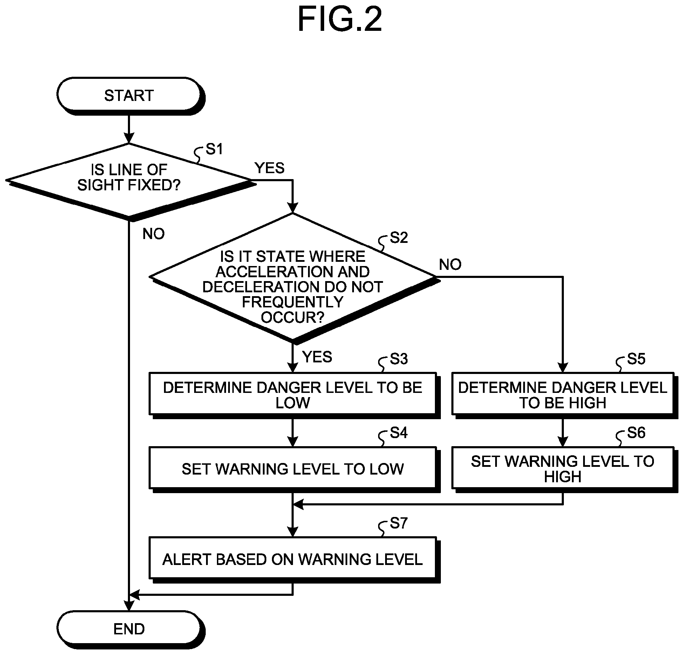

First operation example of the vehicle warning system 1 will now be described. FIG. 2 is a flowchart of a first operation example of the vehicle warning system 1 according to the embodiment. In the first operation example, the vehicle warning system 1 determines the danger level of the vehicle based on the operating condition of accelerating and decelerating the vehicle performed by the driving operation mechanism 2.

As illustrated in FIG. 2, in the vehicle warning system 1, the line-of-sight fixedness determination device 20 determines whether the line of sight of the driver is fixed (Step S1). The line-of-sight fixedness determination device 20 determines that the line of sight of the driver is fixed when the line of sight of the driver covers, for example, a predetermined proportion of the fixedness determination range for a predetermined time. If the line-of-sight fixedness determination device 20 determines that the line of sight of the driver is not fixed (No at Step S1), in other words, that the driver is paying attention to the circumstances of the vehicle, the vehicle warning system 1 determines that the driver does not need to be warned and ends the processing.

In the vehicle warning system 1, if the line-of-sight fixedness determination device 20 determines that the line of sight of the driver is fixed (Yes at Step S1), in other words, that the driver is not paying attention to the circumstances of the vehicle, the danger-level determination device 30 determines whether operations of accelerating and decelerating the vehicle are frequently performed (Step S2). The danger-level determination device 30 determines whether the operations of accelerating and decelerating the vehicle are frequently performed, for example, based on the position of the accelerator and operating information of the brake pedal output from the driving operation mechanism 2. If the danger-level determination device 30 determines that the vehicle is in a state where the operations of accelerating and decelerating are not frequently performed (Yes at Step S2), the vehicle warning system 1 determines that the danger level of the vehicle is low (Step S3), and the warning-level determination unit 41 sets the warning level to low (Step S4). The warning-level determination unit 41 outputs to the alerting unit 42 the determination result that the driver needs to be warned at a low level, for example. In the vehicle warning system 1, the alerting unit 42 alerts the driver based on the warning level (Step S7). When the alerting unit 42 receives from the warning-level determination unit 41 the determination result that the driver needs to be warned at the low level, the alerting unit 42 alerts the driver by, for example, giving an alerting sound from a speaker in the cabin and flashing an alerting light on the instrument panel and then ends the processing.

If the danger-level determination device 30 determines that the operations of accelerating and decelerating the vehicle are frequently performed at the above Step S2 (No at Step S2), the vehicle warning system 1 determines that the danger level of the vehicle is high (Step S5), and the warning-level determination unit 41 sets the warning level to high (Step S6). The warning-level determination unit 41 outputs to the alerting unit 42 the determination result that the driver needs to be warned at the high level. In the vehicle warning system 1, the alerting unit 42 alerts the driver based on the warning level (Step S7). When the alerting unit 42 receives from the warning-level determination unit 41 the determination result that the driver needs to be warned at the high level, the alerting unit 42 alerts the driver by, for example, giving a louder alerting sound than at the low-level warning, from a speaker in the cabin, and flashing an alerting light in a more stimulating color to express a strong alert than at the low-level warning, and then ends the processing.

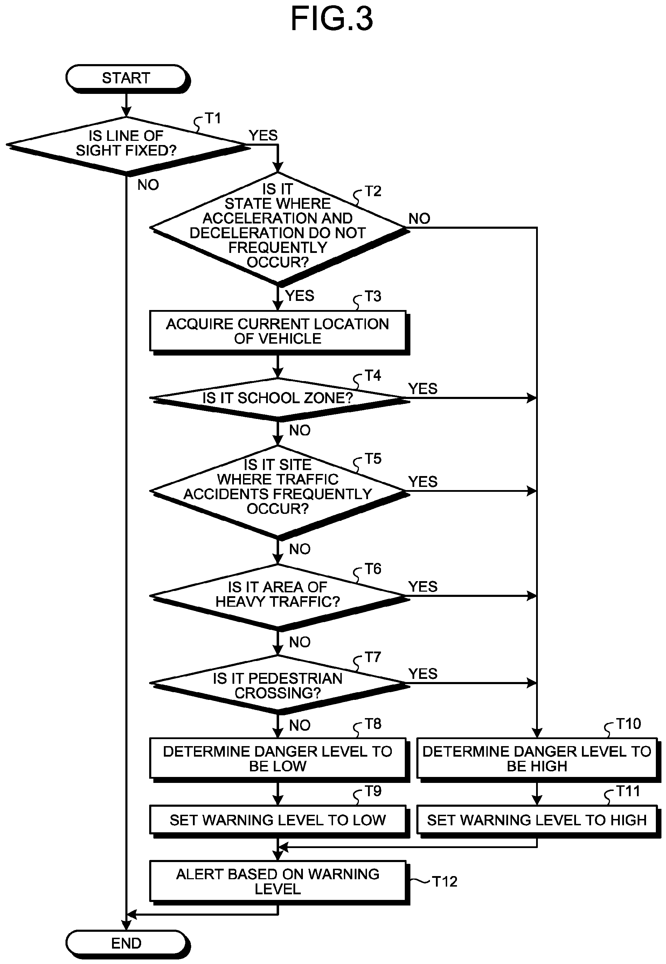

A second operation example of the vehicle warning system 1 will now be described. FIG. 3 is a flowchart of the second operation example of the vehicle warning system 1 according to the embodiment. In the second operation example, the vehicle warning system 1 determines the danger level of the vehicle, based on the operating condition of accelerating and decelerating the vehicle performed by the driving operation mechanism 2, and on the condition of route navigation performed by the navigation system 3.

As illustrated in FIG. 3, in the vehicle warning system 1, the line-of-sight fixedness determination device 20 determines whether the line of sight of the driver is fixed (Step T1). If the line-of-sight fixedness determination device 20 determines that the line of sight of the driver is not fixed (No at Step T1), the vehicle warning system 1 determines that the driver does not need to be warned and ends the processing. In the vehicle warning system 1, if the line-of-sight fixedness determination device 20 determines that the line of sight of the driver is fixed (Yes at Step T1), the danger-level determination device 30 determines whether operations of accelerating and decelerating the vehicle are frequently performed (Step T2). In the vehicle warning system 1, if the danger-level determination device 30 determines that the operations of accelerating and decelerating the vehicle are frequently performed (No at Step T2), the vehicle warning system 1 determines that the danger level of the vehicle is high (Step T10). If the danger-level determination device 30 determines that the vehicle is in a state where the operations of accelerating and decelerating are not frequently performed (Yes at Step T2), the vehicle warning system 1 acquires the current location of the vehicle from the navigation system 3 (Step T3), and outputs the map information and areas of heavy traffic around the vehicle to the danger-level determination device 30.

In the vehicle warning system 1, the danger-level determination device 30 determines the danger level of the vehicle. The danger-level determination device 30 determines, for example, whether the current location of the vehicle is in a school zone (Step T4). If the current location of the vehicle is in a school zone (Yes at Step T4), the danger-level determination device 30 determines that the danger level of the vehicle is high (Step T10).

By contrast, if the current location of the vehicle is not in a school zone (No at Step T4), the danger-level determination device 30 determines whether the current location of the vehicle is in a site where traffic accidents frequently occur (Step T5). If the current location of the vehicle is in a site where traffic accidents frequently occur (Yes at Step T5), the danger-level determination device 30 determines that the danger level of the vehicle is high (Step T10). If the current location of the vehicle is not in a site where traffic accidents frequently occur (No at Step T5), the danger-level determination device 30 then determines whether the current location of the vehicle is in an area of heavy traffic (Step T6). If the current location of the vehicle is in an area of heavy traffic (Yes at Step T6), the danger-level determination device 30 determines that the danger level of the vehicle is high (Step T10).

If the current location of the vehicle is not in an area of heavy traffic (Yes at Step T6), the danger-level determination device 30 determines whether the current location of the vehicle is in the vicinity of a pedestrian crossing (Step T7). If the current location of the vehicle is in the vicinity of a pedestrian crossing (Yes at Step T7), the danger-level determination device 30 determines that the danger level of the vehicle is high (Step T10). If the current location of the vehicle is not in the vicinity of a pedestrian crossing (No at Step T7), the danger-level determination device 30 determines that the danger level of the vehicle is low (Step T8), and the warning-level determination unit 41 sets the warning level to low (Step T9). The warning-level determination unit 41 outputs to the alerting unit 42 the determination result that the driver needs to be warned at the low level. In the vehicle warning system 1, the alerting unit 42 alerts the driver based on the warning level (Step T12). When the alerting unit 42 receives from the warning-level determination unit 41 the determination result that the driver needs to be warned at the low level, the alerting unit 42 alerts the driver by, for example, giving an alerting sound from a speaker in the cabin and flashing an alerting light on the instrument panel and then ends the processing.

At the above Step T10, when the vehicle warning system 1 determines that the danger level of the vehicle is high, the warning-level determination unit 41 sets the warning level to high (Step T11). The warning-level determination unit 41 outputs to the alerting unit 42 the determination result that the driver needs to be warned at the high level. In the vehicle warning system 1, the alerting unit 42 alerts the driver based on the warning level (Step T12). When the alerting unit 42 receives from the warning-level determination unit 41 the determination result that the driver needs to be warned at the high level, the alerting unit 42 alerts the driver by, for example, giving a louder alerting sound than at the low-level warning, from a speaker in the cabin, and flashing an alerting light in a more stimulating color to express a strong alert than at the low-level warning, and then ends the processing.

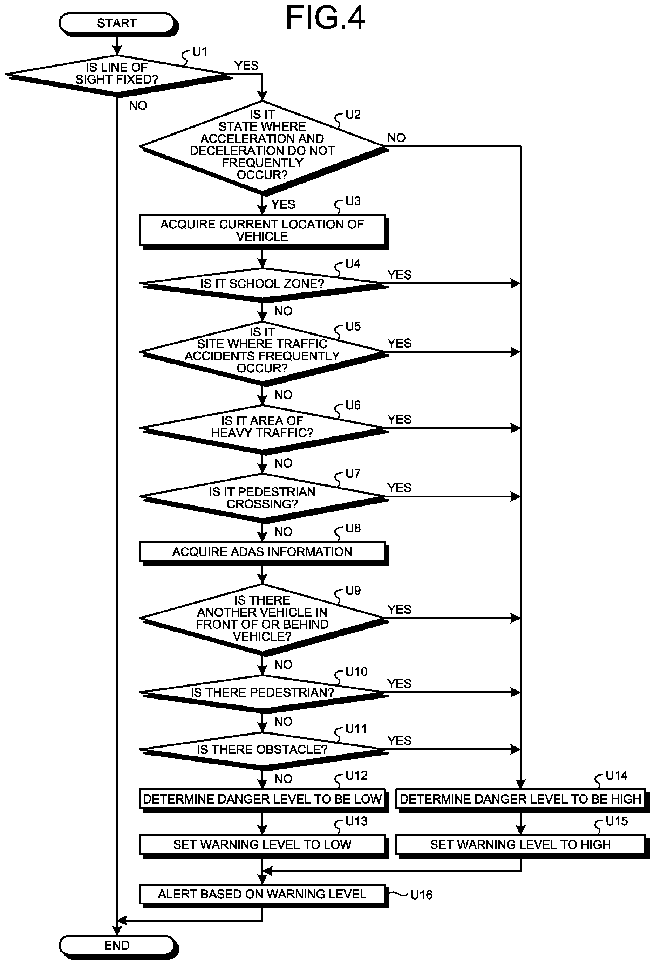

A third operation example of the vehicle warning system 1 will now be described. FIG. 4 is a flowchart of the third operation example of the vehicle warning system 1 according to the embodiment. In the third operation example, the vehicle warning system 1 determines the danger level of the vehicle, based on the operating condition of accelerating and decelerating the vehicle performed by the driving operation mechanism 2, the condition of route navigation performed by the navigation system 3, and the surrounding condition of the vehicle detected by the ADAS 4.

As illustrated in FIG. 3, in the vehicle warning system 1, the line-of-sight fixedness determination device 20 determines whether the line of sight of the driver is fixed (Step U1). If the line-of-sight fixedness determination device 20 determines that the line of sight of the driver is not fixed (No at Step U1), the vehicle warning system 1 determines that the driver does not need to be warned and ends the processing. In the vehicle warning system 1, if the line-of-sight fixedness determination device 20 determines that the line of sight of the driver is fixed (Yes at Step U1), the danger-level determination device 30 determines whether operations of accelerating and decelerating the vehicle are frequently performed (Step U2). If the danger-level determination device 30 determines that the operations of accelerating and decelerating the vehicle are frequently performed (No at Step U2), the vehicle warning system 1 determines that the danger level of the vehicle is high (Step U14). If the danger-level determination device 30 determines that the vehicle is in a state where the operations of accelerating and decelerating are not frequently performed (Yes at Step U2), the vehicle warning system 1 acquires the current location of the vehicle from the navigation system 3 (Step U3), and outputs the map information and areas of heavy traffic around the vehicle to the danger-level determination device 30.

In the vehicle warning system 1, the danger-level determination device 30 determines the danger level of the vehicle. For example, the danger-level determination device 30 determines whether the current location of the vehicle is in a school zone, a site where traffic accidents frequently occur, an area of heavy traffic, or in the vicinity of a pedestrian crossing (Steps U4 to U7). If the current location of the vehicle is in a school zone, a site where traffic accidents frequently occur, an area of heavy traffic, or in the vicinity of a pedestrian crossing (Yes at Steps U4 to U7), the danger-level determination device 30 determines that the danger level of the vehicle is high (Step U14).

If the current location of the vehicle is not in a school zone, a site where traffic accidents frequently occur, an area of heavy traffic, or in the vicinity of a pedestrian crossing (No at Steps U4 to U7), the danger-level determination device 30 acquires the ADAS information (Step U8). The danger-level determination device 30 determines the presence or absence of another vehicle in front of or behind the vehicle including the danger-level determination device 30, based on the acquired ADAS information (Step U9). In the presence of another vehicle in front of or behind the vehicle (Yes at Step U9), the danger-level determination device 30 determines that the danger level of the vehicle is high (Step U14). In the absence of any vehicle in front of or behind the vehicle (No at Step U9), the danger-level determination device 30 determines the presence or absence of a pedestrian around the vehicle (Step U10).

In the presence of a pedestrian around the vehicle (Yes at Step U10) including the danger-level determination device 30, the danger-level determination device 30 determines that the danger level of the vehicle is high (Step U14). In the absence of any pedestrian around the vehicle (No at Step U10), the danger-level determination device 30 determines the presence or absence of any obstacle around the vehicle (Step U11). In the presence of any obstacle around the vehicle (Yes at Step U11), the danger-level determination device 30 determines that the danger level of the vehicle is high (Step U14).

In the absence of any obstacle around the vehicle (No at Step U11), the danger-level determination device 30 determines that the danger level of the vehicle is low (Step U12), and the warning-level determination unit 41 sets the warning level to low (Step U13). The warning-level determination unit 41 outputs to the alerting unit 42 the determination result that the driver needs to be warned at the low level. In the vehicle warning system 1, the alerting unit 42 alerts the driver based on the warning level (Step U16). When the alerting unit 42 receives from the warning-level determination unit 41 the determination result the alerting unit 42 that the driver needs to be warned at the low level, the alerting unit 42 alerts the driver by, for example, giving an alerting sound from a speaker in the cabin and flashing an alerting light on the instrument panel and then ends the processing.

In the vehicle warning system 1, when the danger level of the vehicle is determined to be high at the above Step U14, the warning-level determination unit 41 sets the warning level to high (Step U15). The warning-level determination unit 41 outputs to the alerting unit 42 the determination result that the driver needs to be warned at the high level. In the vehicle warning system 1, the alerting unit 42 alerts the driver based on the warning level (Step U16). When the alerting unit 42 receives from the warning-level determination unit 41 the determination result that the driver needs to be warned at the high level, the alerting unit 42 alerts the driver by, for example, giving a louder alerting sound than at the low-level warning, from a speaker in the cabin, and flashing an alerting light in a more stimulating color to express a strong alert than at the low-level warning, and then ends the processing.

As described above, the vehicle warning system 1 according to the embodiment includes the line-of-sight detection unit 12, the line-of-sight fixedness determination device 20, the danger-level determination device 30, the warning-level determination unit 41, and the alerting unit 42. The line-of-sight detection unit 12 detects the line of sight of a driver operating the vehicle. The line-of-sight fixedness determination device 20 determines the line-of-sight fixedness condition, in other words, how much the line of sight of the driver that is detected by the line-of-sight detection unit 12, is fixed. The danger-level determination device 30 determines the driving conditions. The warning-level determination unit 41 determines the warning level, based on the line-of-sight fixedness conditions that are determined by the line-of-sight fixedness determination device 20, and the driving conditions that are determined by the danger-level determination device 30. The alerting unit 42 alerts the driver based on the warning level that is determined by the warning-level determination unit 41.

The vehicle warning system 1 is configured not to alert the driver, for example, if the line of sight of the driver is not fixed, in other words, if the driver is paying attention to the circumstances of the vehicle. Conversely, the vehicle warning system 1 is configured to alert the driver if the line of sight of the driver is fixed, in other words, if the driver is not paying attention to the circumstances of the vehicle. In alerting the driver, the vehicle warning system 1 sets the warning level to low to weakly alert the driver if the level of danger is low according to the driving conditions. The vehicle warning system 1 sets the warning level to high to strongly alert the driver if the level of danger is high according to the driving conditions. In this manner, the vehicle warning system 1 can appropriately alert the driver based on the driving conditions, thereby preventing the driver from being annoyed by the alerts.

In the above vehicle warning system 1, the driving conditions include at least one of the operating condition of accelerating and decelerating the vehicle, the condition of route navigation to suggest a route to the destination, and the surrounding condition of the vehicle. With this configuration, the vehicle warning system 1 can set a warning level corresponding to various dangerous situations around the vehicle.

In the above vehicle warning system 1, the warning-level determination unit 41 increases the warning level when the line-of-sight fixedness determination device 20 determines that the line of sight of the driver is fixed and the danger-level determination device 30 determines that the driving conditions are dangerous, compared with the warning level when the line of sight of the driver is not fixed and the driving conditions are not dangerous. With this configuration, the vehicle warning system 1 can appropriately alert the driver.

In the vehicle warning system 1, the type of road where the vehicle is running includes an expressway and an ordinary road having a speed limit lower than a speed limit on the expressway. If the vehicle is running on the expressway, the line-of-sight fixedness determination device 20 applies a stricter criterion than a criterion applied to the ordinary road, to determine the fixedness of the line of sight of the driver. With this configuration, the vehicle warning system 1 less easily determines the line of sight of the driver to be fixed while the vehicle is running on the expressway, compared with the case on the ordinary road, and therefore the driver is less warned on the expressway. The vehicle warning system 1 can thus prevent the driver from being annoyed by frequent alerts on the expressway because the driving on the expressway can be safe with a smaller number of warnings than the number of warnings on the ordinary road.

### Modification

A modification of the embodiment will now be described. In the above examples, the driving conditions include at least one of the operating condition of accelerating and decelerating the vehicle, the condition of route navigation to suggest a route to the destination, and the surrounding condition of the vehicle. The example conditions are not limiting, and may include other conditions.

In the examples, the line-of-sight fixedness determination device 20 applies stricter criteria to determine the fixedness of the line of sight of the driver for the vehicle on the expressway, than the criteria for the vehicle on the ordinary road. This configuration is, however, not limiting, and the same criteria to determine the fixedness of the line of sight may be applied regardless of the type of road.

The fixedness determination range has been described as a range that allows the line of sight of the driver to vertically and horizontally move approximately +/- five degrees in each direction, with the line of sight of the driver facing the front of the vehicle as a reference. The fixedness determination range is not limited to this example, and another range may be used.

In the above examples, for the ordinary road, the line-of-sight fixedness determination device 20 determines that the line of sight of the driver is fixed when the line of sight of the driver covers more than 80% of the fixedness determination range for ten seconds. Without being limited thereto, the time and the proportion may be changed.

Furthermore, in the above examples, the alerting unit 42 alerts the driver by giving an alerting sound from a speaker in the cabin and flashes an alerting light mounted on the instrument panel. These manners are not limiting, and another manner may be used to alert the driver.

A vehicle warning system according to the present embodiment alerts a driver using the level of warning that is determined based on the line-of-sight fixedness condition, more specifically, how much the line of sight of the driver is fixed, and on the driving conditions. This manner is effective in appropriately alerting the driver.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A vehicle warning system (1), comprising:
a line-of-sight detection unit (12) configured to detect a line of sight of a driver operating a vehicle;
a line-of-sight fixedness determination unit (20) configured to determine how much the line of sight of the driver that is detected by the line-of-sight detection unit (12) is fixed;
a driving condition determination unit (30) configured to determine a driving condition of the vehicle;
a warning-level determination unit (41) configured to determine a warning level, based on how much the line of sight of the driver is fixed that is determined by the line-of-sight fixedness determination unit (20), and the driving condition of the vehicle that is determined by the driving condition determination unit (30); and
an alerting unit (42) configured to issue an alert based on the warning level that is determined by the warning-level determination unit (41).

2. The vehicle warning system (1) according to claim 1, wherein
the driving condition of the vehicle includes at least one of an operating condition of accelerating and decelerating the vehicle, a condition of route navigation to suggest a route to a destination, and a surrounding condition of the vehicle.

3. The vehicle warning system (1) according to claim 1 or 2, wherein
the warning-level determination unit (41) increases the warning level when the line-of-sight fixedness determination unit (20) determines that the line of sight of the driver is fixed and the driving condition determination unit (30) determines that the driving condition of the vehicle is dangerous, compared with a warning level when the line of sight of the driver is not fixed and the driving condition of the vehicle is not dangerous.

4. The vehicle warning system (1) according to any one of claims 1 to 3, wherein
a type of road where the vehicle is running includes an expressway and an ordinary road having a speed limit lower than a speed limit on the expressway, and
when the type of road where the vehicle is running is the expressway, the line-of-sight fixedness determination unit (20) applies a stricter criterion than a criterion applied to the ordinary road, to determine fixedness of the line of sight of the driver.
